# FASCICULE DE BREVET EUROPEEN

(11) **EP 4 229 448 B1**
(45) Date de publication et mention de la délivrance du brevet: **27.05.2026**
(21) Numéro de dépôt: 21811401.5
(22) Date de dépôt: 26.11.2021
(51) Int. Cl.: G01T 1/02

(54) **DISPOSITIF INDIVIDUEL AUTONOME DE MESURE DE RAYONNEMENTS IONISANTS**
INDIVIDUELLE AUTONOME VORRICHTUNG ZUR MESSUNG IONISIERENDER STRAHLUNG
INDIVIDUAL SELF-CONTAINED DEVICE FOR MEASURING IONISING RADIATION

(43) Date de publication de la demande: 23.08.2023
(73) Titulaire: ISYMAP, 30200 Bagnols-sur-Cèze (FR)
(72) Inventeur: BALLIER, Aurélien, 30200 BAGNOLS SUR CEZE (FR); LISSANDRE, Marie-Anne, 30200 SAINT MICHEL D'EUZET (FR)
(74) Mandataire: Cornuejols, Marine Sophie
(86) Numéro de dépôt international: PCT/EP2021/083187
(87) Numéro de publication internationale: WO 2022/112508

(56) Documents cités:
- WO-A1-2015/119526
- WO-A1-2020/142728
- SEUNG YUN HEO ET AL: "Wireless, battery-free, flexible, miniaturized dosimeters monitor exposure to solar radiation and to light for phototherapy", SCIENCE TRANSLATIONAL MEDICINE, vol. 10, no. 470, 5 December 2018 (2018-12-05), US, pages eaau1643, XP055772027, ISSN: 1946-6234, DOI: 10.1126/scitranslmed.aau1643

## Description

### DOMAINE TECHNIQUE DE L'INVENTION

La présente invention vise un dispositif de détection individuel autonome de mesure des rayonnements ionisants. Elle s'applique au domaine de la sécurité des opérateurs en milieux où sont susceptibles d'être présents des rayonnements ionisants.

### ÉTAT DE LA TECHNIQUE

La réglementation impose que lors d'interventions sous rayonnements ionisants la prise en compte et la quantification du risque pour les opérateurs soient réalisées. La prise en compte du risque est faite grâce à la réalisation d'études des postes de travail. La quantification du risque est réalisée à l'aide de dosimètres.

Deux grandes familles de dosimètres sont utilisées :
Les dosimètres passifs ne fournissent pas de mesure instantanée et nécessitent une analyse à posteriori en laboratoire. Ces dispositifs sont considérés comme les plus fiable et servent généralement de dosimétrie légale. Ces dispositifs ne permettent pas de différencier le jour ou le chantier pendant lequel la dose a été captée et ne permet pas de connaitre instantanément le débit de dose, ni rapidement la dose intégrée.

Les dosimètres passifs peuvent être utilisés pour :
- de la dosimétrie corps entier permettant d'estimer la dose prise par l'opérateur,
- de la dosimétrie extrémités permettant d'estimer de manière plus précise la dose prise par l'opérateur au niveau des doigts ou du cristallin par exemple.

Les dosimètres actifs permettent une mesure en temps réel du débit de dose et de la dosimétrie des opérateurs. Ces dispositifs permettent d'alerter en temps réel l'opérateur et notamment lui indiquer s'il risque de dépasser le seuil de dosimétrie pour lequel son opération avait été prévue lors de la phase d'étude préalable. Malgré le fait que ces dispositifs ne soient pas utilisés pour la dosimétrie légale, il est obligatoire de les porter car ils alertent l'opérateur du danger tout en donnant une indication quantitative. Par exemple, le document WO 2015/119526 A1 divulgue un dosimètre miniature pour rayonnements ionisants, par exemple dans un smartphone, doté d'un microprocesseur connecté à une interface de commande et de transmission de données, qui est reliée aux bus de données et d'alimentation électrique de l'appareil mobile.

### PRÉSENTATION DE L'INVENTION

La présente invention vise à remédier à tout ou partie de ces inconvénients et, notamment à apporter une solution de dosimétrie active pour les extrémités et le cristallin.

À cet effet, la présente invention vise un dispositif individuel autonome de mesure d'au moins un rayonnement ionisant, tel que défini par la revendication indépendante

Le dispositif objet de l'invention permet ainsi une connaissance par son porteur et/ou par un superviseur, en temps réel, du flux de rayonnements ionisants et/ou de la dose intégrée par l'opérateur qui porte le dispositif.

Le dispositif s'applique non seulement aux opérateurs professionnels agissant dans un environnement où sont susceptibles d'être présents des rayonnements ionisants, mais aussi, par exemple à la médecine nucléaire, pour laquelle le dispositif permet de contrôler, en temps réel, la dose intégrée par un organe ou une zone du corps lors d'une radiothérapie, tout en minimisant la contrainte sur le patient.

Le dispositif objet de la présente invention présent une miniaturisation très importante, malgré les contraintes associées au matériel électronique. L'objet de la présente invention permet de capter des rayonnements ionisants, dont les rayonnements Gamma/Beta mesurés pour les applications nucléaires par une mise en forme du signal représentatif des rayonnements captés.

L'énergie provenant de ces rayonnements est de l'ordre du nano-Ampère, ce qui est trop faible pour alimenter le dispositif objet de la présente invention en énergie. C'est pourquoi celui-ci nécessite obligatoirement une source d'énergie supplémentaire, ce qui augmente le nombre et la taille des composantes du dispositif objet de la présente invention tout en restant embarqués dans une enveloppe d'une surface inférieure à soixante mm² et d'un poids inférieur à dix grammes pour pouvoir être placés sur les extrémités ou le cristallin d'un opérateur

Dans des modes de réalisation, le dispositif objet de l'invention comporte un générateur de tension de biais, chaque capteur de rayonnements ionisants mettant en œuvre cette tension de biais, dans lequel la tension de biais est la tension en sortie de la source d'alimentation électrique autonome ou une tension stabilisée proche de la tension de la source d'alimentation électrique autonome.

On réduit ainsi le nombre de composants électroniques du dispositif, ce qui améliore sa miniaturisation.

Dans des modes de réalisation, le dispositif objet de l'invention comporte un composant unique de traitement du signal configuré pour réaliser des fonctions de pré-amplification, d'amplification et de mise en forme du signal fourni par chaque capteur.

On réduit ainsi le nombre de composants électroniques du dispositif, ce qui améliore sa miniaturisation.

Dans des modes de réalisation, le composant unique de traitement du signal présente :
- une haute impédance d'entrée,
- un faible courant de biais (< 1 pA) en entrée,
- un faible bruit (< 10 nV/Hz),
- une large bande passante (> 10 MHz).

Ces caractéristiques permettent la miniaturisation du dispositif objet de l'invention, tout en assurant une qualité de signal importante.

Dans des modes de réalisation, le dispositif objet de l'invention comporte un composant unique d'analyse du signal fourni par chaque capteur après amplification, ce composant comportant aussi l'émetteur de signal sans fil.

On réduit ainsi le nombre de composants électroniques du dispositif, ce qui améliore sa miniaturisation.

Dans des modes de réalisation, le dispositif objet de l'invention comporte un composant unique multifonction de protection de la source d'alimentation électrique autonome contre les surtensions, les décharges profondes et les surchauffes, de gestion de la charge de la source d'alimentation électrique autonome et de gestion de la tension d'alimentation du circuit d'analyse.

On réduit ainsi le nombre de composants électroniques du dispositif, ce qui améliore sa miniaturisation et son autonomie.

Dans des modes de réalisation, la gestion de l'alimentation de l'enveloppe par le composant unique multifonction est configurée pour :
- fournir, au plus, deux tensions différentes,
- s'il y a plus d'une tension, les tensions sont comprises entre la moitié en plus et la moitié en moins de la tension de source d'alimentation électrique autonome.

On réduit ainsi le nombre de composants électroniques du dispositif, ce qui améliore sa miniaturisation et son autonomie.

L'intérêt de ces modes de réalisation est également de limiter les différences de tensions entre la tension de la batterie et les tensions nécessaires pour le système. L'efficacité des convertisseurs de tension n'étant pas de 100%, limiter les différences de tensions limite les pertes d'énergie et donc permet d'utiliser une batterie plus petite pour la même autonomie.

Dans des modes de réalisation, le dispositif objet de l'invention comporte, de plus, un terminal portable comportant un récepteur des données émise par l'émetteur de l'enveloppe et un moyen de signalisation au porteur de l'enveloppe miniature quand les dites données représentent un rayonnement instantané ou un rayonnement intégré supérieur à une valeur limite prédéterminée.

Ce terminal portable permet au porteur de l'enveloppe d'obtenir une mesure de la dose intégrée ainsi que le débit de dose au niveau de l'enveloppe, par exemple, au niveau des mains de l'opérateur ou de ses yeux. L'opérateur est ainsi alerté en temps réel d'un dépassement de seuil de débit de dose ou de dosimétrie.

Dans des modes de réalisation, le dispositif objet de l'invention comporte, de plus, un relais local de données émises par l'émetteur de l'enveloppe, relais configuré pour retransmettre, à longue distance, les données émises par l'émetteur de l'enveloppe.

Le relais permet de transmettre l'information sur une longue distance avec ou sans-fils ainsi que de déterminer la zone dans laquelle se situe le dispositif.

Dans des modes de réalisation, le dispositif objet de l'invention comporte, de plus, un récepteur central de données émises par l'émetteur et un système de gestion desdites données.

Chaque dispositif étant lié à un opérateur unique, il est possible de suivre avec précision la dosimétrie de chaque opérateur en temps réel tout en estimant les débits de doses ambiants de l'environnement dans lequel il travaille. Chaque superviseur est ainsi alerté en temps réel d'un dépassement de seuil de débit de dose ou de dosimétrie.

Dans des modes de réalisation, le dispositif objet de l'invention comporte une bague portant ladite enveloppe.

Cette bague pouvant être portée au doigt par l'opérateur, sous des gants de protection, permet d'effectuer une dosimétrie d'extrémités.

Dans des modes de réalisation, le dispositif objet de l'invention comporte un petit boitier comportant ladite enveloppe, ce boîtier étant clipsable sur des lunettes ou intégrable dans un bandeau.

Ce boîtier permet d'effectuer la dosimétrie au niveau du cristallin ou de toute partie spécifique du corps.

Dans des modes de réalisation, le dispositif objet de l'invention comporte une mémoire d'un identifiant de l'enveloppe, d'un poste de travail ou du porteur de l'enveloppe, l'émetteur de signal sans-fil étant configuré pour émettre à distance cet identifiant avec des données représentatives de chaque signal fourni par un capteur.

On peut ainsi identifier le porteur de la bague, sans risque d'erreur sur l'attribution des doses mesurées. On permet ainsi de classer les informations dosimétriques par un logiciel de supervision.

Dans des modes de réalisation, l'espace intérieur de l'enveloppe, entre chaque capteur, l'émetteur et la source d'alimentation, est coulé dans une résine.

Couler l'espace intérieur de l'enveloppe dans une résine est possible étant donné que l'optimisation de la consommation électrique a permis de réduire les dégagements de chaleur. L'intérêt de couler le dispositif dans la résine est notamment de diminuer la taille de l'enveloppe et rendre le dispositif plus résistant aux chocs et vibrations.

Dans des modes de réalisation, l'émetteur est configuré pour transmettre des données à une distance inférieure à la distance de communication d'un réseau local sans-fil.

Dans des modes de réalisation, le dispositif objet de l'invention comporte un moyen de détection du port de l'enveloppe par un opérateur et un moyen d'activation du fonctionnement de chaque capteur et de l'émetteur de l'enveloppe dès que le port de l'enveloppe par un opérateur est détecté.

Dans des modes de réalisation, l'enveloppe comporte une mémoire autonome de stockage de valeurs captées et/ou de valeurs calculées.

Cette mémoire permet, en cas de défaillance de communication, une transmission ultérieure.

Les différentes caractéristiques particulières de la présente invention sont destinées à être combinées pour former différents dispositifs individuels autonomes de mesure d'au moins un rayonnement ionisant présentant tout ou partie des avantages exposés ci-dessus.

### BRÈVE DESCRIPTION DES FIGURES

D'autres avantages, buts et caractéristiques particulières de l'invention ressortiront de la description non limitative qui suit d'au moins un mode de réalisation particulier du dispositif objet de l'invention, en regard des dessins annexés, dans lesquels :
- La figure 1 représente, sous forme d'un schéma-bloc, une chaîne de traitement 20 d'un signal pour détecteur de rayonnement ionisant d'un dispositif objet de l'invention,
- La figure 2 représente, sous forme d'un schéma bloc, des fonctions d'un circuit électronique d'un dispositif objet de l'invention,
- La figure 3 représente une partie pré amplification du circuit électronique illustré en figure 2,
- La figure 4 représente des fonctions d'un circuit électronique d'une enveloppe miniature d'un dispositif objet de l'invention et
- La figure 5 représente un mode de réalisation particulier du dispositif objet de l'invention.

### DESCRIPTION DES MODES DE RÉALISATION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

Dans toute la description, on utilise le terme d'opérateur aussi bien pour un professionnel agissant dans un environnement susceptible de présenter des rayonnements ionisants, que pour un patient en médecine nucléaire, notamment en traitement de radiothérapie.

On rappelle ici que les rayonnements ionisants sont une forme d'énergie libérée par les atomes qui se propage par le biais d'ondes électromagnétiques (rayons gamma ou X) ou de particules (neutrons, particules bêta ou alpha). La désintégration spontanée des atomes est appelée radioactivité et l'énergie en excès est émise sous forme de rayonnements ionisants. Les éléments instables qui se désintègrent en émettant des rayonnements ionisants sont appelés radionucléides.

Tous les radionucléides sont identifiés de façon unique par le type de rayonnement qu'ils émettent, l'énergie de ce rayonnement et leur demi-vie.

L'activité - qui mesure la quantité de radionucléide présente - est exprimée dans une unité appelée le becquerel (Bq) : un becquerel correspond à une désintégration par seconde. La demi-vie est le temps nécessaire pour que l'activité d'un radionucléide diminue de moitié par rapport à sa valeur initiale. C'est aussi le temps requis pour que la moitié des atomes qu'il contient se désintègrent. La demi-vie peut varier d'une simple fraction de seconde à des millions d'années (l'iode 131 par exemple a une demi-vie de 8 jours, tandis que le carbone 14 a une demi-vie de 5730 ans).

On rappelle notamment ici que les ultraviolets (« UV ») ne sont pas des rayonnements ionisants.

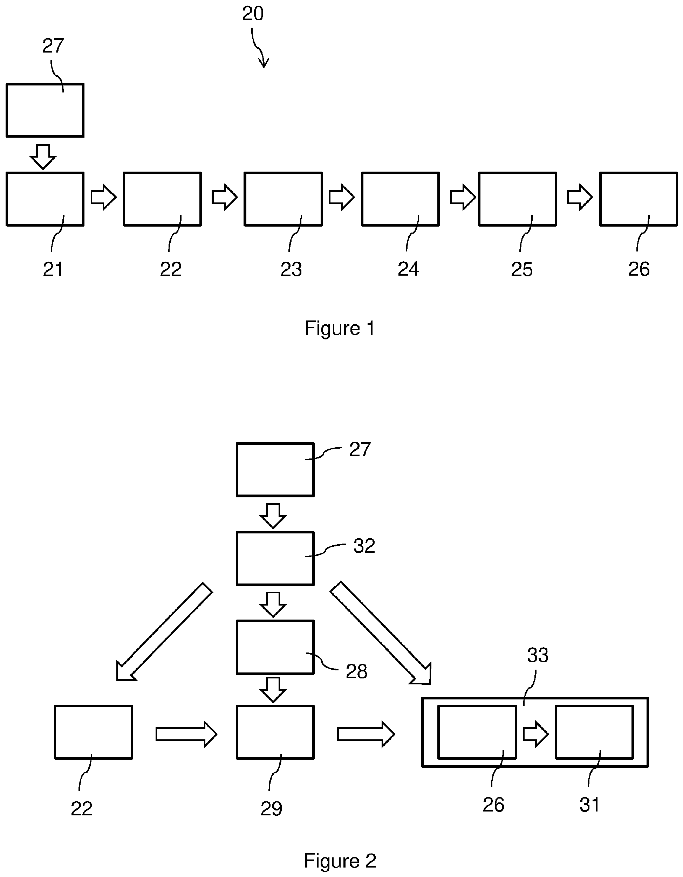

On observe, en figure 1, une chaîne de traitement 20 d'un signal pour détecteur de rayonnement ionisant. Cette chaîne 20 comporte une tension de biais 21 et un capteur 22 de rayonnements ionisants mettant en œuvre cette tension de biais 21. Le signal sortant du capteur 22 est préamplifié par un préamplificateur 23 puis amplifié par un amplificateur 24. Puis, le signal amplifié est mis en forme par un module de mise en forme 25, avant d'être analysé par un analyseur 26.

La miniaturisation du dispositif tient notamment à ses caractéristiques techniques suivantes :
- la tension de biais 21 est la tension d'une batterie 27, par exemple, de type LiPo (3,0 à 4,2 V continu), ou une tension stabilisée proche de la tension de batterie 27, préférentiellement, la même que celle d'alimentation du préamplificateur 34 (2,8 v).
- la capteur 21 présente une dimension de l'ordre de vingt mm²,
- tout le traitement du signal est réalisé via un unique composant 29,
- l'analyse du signal 26 est faite via un composant 33 qui comporte l'émetteur de signal sans fil 31.

Le circuit électronique est représenté en figure 2. Il comporte un système 32 de gestion de la batterie 27 qui fournit une tension continue 28, le capteur 22, le composant 29 de traitement du signal et le composant 33 d'analyse du signal et d'émission à distance sans fil. Le composant 29 de traitement du signal réalise les fonctions de pré-amplification 23, d'amplification 24 et de mise en forme 25 illustrées en figure 1.

Le composant 29 de traitement du signal présente :
- une haute impédance d'entrée,
- un faible courant de biais (< 1 pA) en entrée,
- un faible bruit (< 10 nV/Hz),
- une large bande passante (> 10 MHz).

On rappelle ici que la haute impédance est, en électronique, définie comme suit :
En électronique, la haute impédance est l'état d'une broche de sortie qui n'est pas commandé par sa composante. Dans les composants numériques, cela signifie que le signal est à un niveau logique ni haut, ni bas. Un tel signal peut être vu comme un circuit ouvert (ou comme un fil « flottant ») car en le connectant à un composant à basse impédance il ne va pas l'affecter. La majorité des broches des circuits intégrés sont en fait des sorties tri-state qui sont connectées en interne à des entrées.

En électronique analogique le mode haute impédance est défini quand il n'existe aucun chemin basse impédance sur aucun des autres nœuds. La haute impédance en électronique analogique permet d'obtenir de fortes amplifications pour une faible consommation de courant.

La gestion de l'alimentation par le système 32 de gestion de la batterie 27 est optimisée de la manière suivante :
- on limite à deux le nombre de tensions différentes fournies, ce qui réduit le nombre de composants,
- on améliore l'efficacité des alimentations en utilisant des tensions de fonctionnement proches, c'est-à-dire entre la moitié en plus et la moitié en moins de la tension de batterie, par exemple de 3,6 V continu,
- on choisit un composant de traitement du signal 29 en utilisant la plage de tension variable de la batterie de 3 à 4,2 V continu, l'alimentation du composant de traitement du signal 29 en 2,8 V continu permet d'exploiter la totalité de la charge de la batterie et donc de limiter la taille de cette dernière pour une autonomie équivalente.
- on utilise un unique composant multifonction 32 de protection de la batterie 27 (contre les surtensions, décharges profondes, surchauffes) de gestion de la charge de la batterie 27 et de gestion de la tension d'alimentation du circuit d'analyse 26.

Pour optimiser des couches du circuit imprimé portant l'ensemble des composants électroniques du dispositif, le montage se fait sur un circuit imprimé ayant six couches, ce qui augmente la densité de pistes conductrices.

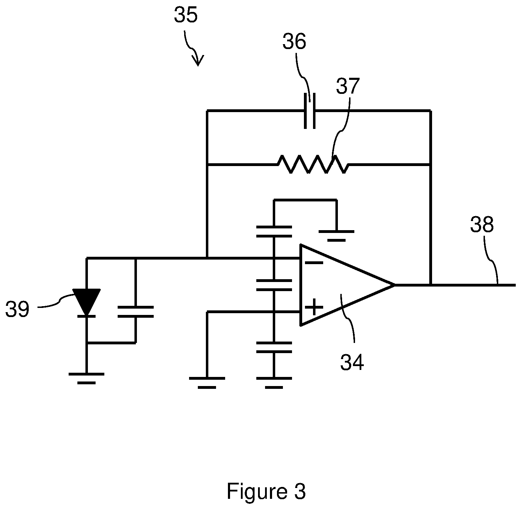

On observe, en figure 3, le montage 35 de l'amplificateur opérationnel 34 réalisant la pré amplification.

Les composants sélectionnés sont miniatures. Préférentiellement, ils sont soudés à partir de microbilles d'étain par le dessous du composant, ce qui permet un encombrement minimal sur la carte électronique.

Les composants étant à faible consommation de courant, ils génèrent peu de dégagement de chaleur. Préférentiellement, les composants et l'ensemble du circuit imprimé sont coulés dans de la résine, ce qui a plusieurs avantages. D'une part, on minimise l'encombrement du boîtier et, d'autre part, on garantit l'intégrité physique des composants face aux chocs ou à divers stress mécaniques.

Le CSP (« Central Signal Processor ») est un élément important de la chaîne analogique. Il transforme les faibles charges électriques provenant de l'interaction rayonnement / matière à l'intérieur du capteur en tension.

Un CSP génère un signal en sortie 38 en chargeant la capacité 36 via les charges du capteur, ces charges sont amplifiées à l'aide d'une boucle de contre réaction afin d'avoir un signal exploitable en sortie 38. La résistance 37 permet de décharger la capacité 36 et de générer des pulsations de sortie plutôt qu'un état haut ou bas.

Un semiconducteur 39 formant capteur de rayonnement, en entrée a une capacité propre qui confère au circuit une complexité supplémentaire, compensé par les autres capacités du montage, qui correspondent aux capacités d'entrée de l'amplificateur opérationnel 34.

Deux facteurs de stabilité sont à prendre en compte :
- la résistance 37 doit être suffisamment important afin de ne pas introduire du bruit sur le CSP. Des valeurs comprises entre 10 et 100 MΩ ont été validées expérimentalement ;
- la capacité 36 doit être assez petite afin de garantir la collecte la plus rapide des charges du capteur. Des valeurs entre 0,5 et 2,0 pF ont été validées expérimentalement.

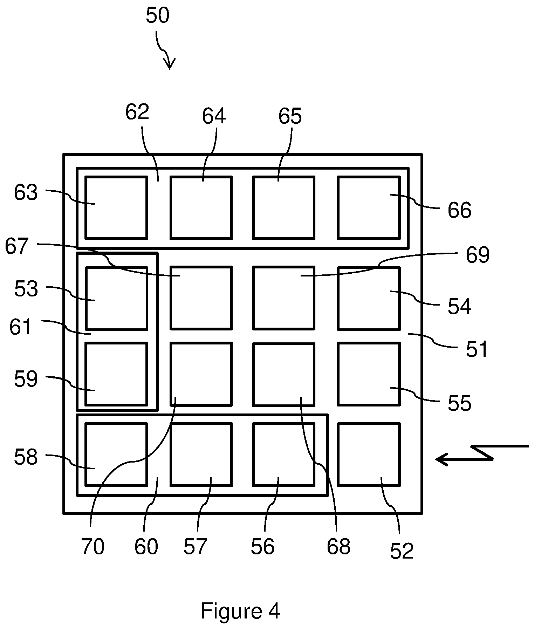

On observe, en figure 4, une enveloppe 50, d'une surface inférieure à soixante mm² et d'un poids inférieur à dix grammes qui comporte, sur un circuit imprimé 51 :
- un capteur 52 de rayonnement ionisant, fournissant un signal électrique représentatif de la quantité du rayonnement ionisant,
- un émetteur 53 de signal sans-fil qui transmet à distance des données représentatives de chaque signal fourni par un capteur,
- un générateur 55 de tension de biais, le capteur 52 mettant en œuvre cette tension de biais.

Une source 54 d'alimentation électrique autonome configurée pour alimenter chaque capteur et ledit émetteur, n'est pas directement sur le circuit imprimé 51, mais lui est relié par des fils conducteurs.

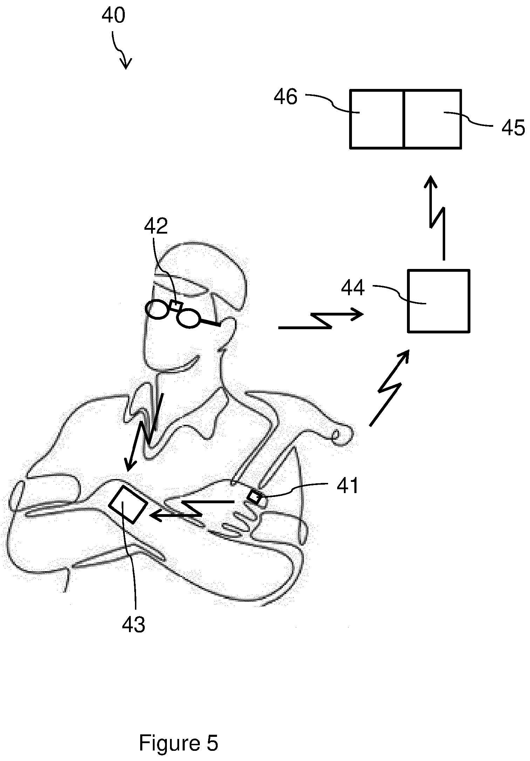

Les composants illustrés en figure 4 sont embarqués dans une enveloppe 50 miniature et légère pouvant être portée sans gêne, sous la forme d'une bague sous un gant ou sur des lunettes, par un opérateur, comme illustré en figure 5.

Préférentiellement, la tension de biais est la tension en sortie de la source 54 d'alimentation électrique autonome ou une tension stabilisée proche de la tension de batterie 27, préférentiellement, la même tension que celle d'alimentation du préamplificateur 34 (2,8 v).

Préférentiellement, l'émetteur 53 est configuré pour transmettre des données à une distance inférieure à la distance de communication d'un réseau local sans-fil. On réduit ainsi la consommation électrique de cet émetteur 53.

Préférentiellement, un composant unique 60 de traitement du signal réalise des fonctions de pré-amplification 56, d'amplification 57 et de mise en forme 58 du signal fourni par chaque capteur.

Préférentiellement, le composant unique de traitement du signal présente :
- une haute impédance d'entrée,
- un faible courant de biais (< 1 pA) en entrée,
- un faible bruit (< 10 nV/Hz),
- une large bande passante (> 10 MHz).

Préférentiellement, un composant unique 61 d'analyse 59 du signal fourni par le capteur 52 après amplification, comporte aussi l'émetteur 53 de signal sans fil.

L'analyse 59 effectue le calcul du flux de rayonnements ionisants ainsi que la dose intégrée par l'opérateur, l'émetteur 53 transmettant les valeurs calculées en temps réel.

Préférentiellement, un composant unique 62 multifonction assure les fonctions 63 de protection de la source d'alimentation électrique autonome contre les surtensions, les décharges profondes et les surchauffes, de gestion 64 de la charge de la source d'alimentation électrique autonome, de gestion 65 de la tension d'alimentation du composant d'analyse 61et de gestion 66 d'une autre tension d'alimentation des composants de l'enveloppe 51. On réduit ainsi le nombre de composants électroniques du dispositif, ce qui améliore sa miniaturisation et son autonomie.

Préférentiellement, la gestion 66 de l'alimentation de l'enveloppe par le composant unique 62 multifonction est configurée pour :
- fournir, au plus, deux tensions différentes,
- s'il y a plus d'une tension, les tensions sont comprises entre la moitié en plus et la moitié en moins de la tension de source d'alimentation électrique autonome.

On réduit ainsi le nombre de composants électroniques du dispositif, ce qui améliore sa miniaturisation et son autonomie.

Préférentiellement, la source 54 d'alimentation électrique autonome est une batterie rechargeable ou jetable, associée à un moyen de transfert d'énergie électrique avec ou sans fil.

Dans le mode de réalisation illustré en figure 4, le circuit 51 comporte une mémoire 67 d'un identifiant de l'enveloppe 50, d'un poste de travail ou du porteur de l'enveloppe, l'émetteur 53 de signal sans-fil étant configuré pour émettre à distance cet identifiant avec des données représentatives de chaque signal fourni par un capteur 52.

On peut ainsi identifier le porteur de la bague, sans risque d'erreur sur l'attribution des doses mesurées. On permet ainsi de classer les informations dosimétriques par un logiciel de supervision.

Chaque dispositif étant lié à un opérateur unique, il est possible de suivre avec précision la dosimétrie de chaque opérateur en temps réel tout en estimant les débits de doses ambiants de l'environnement dans lequel il travaille. Le dispositif objet de l'invention permet ainsi une connaissance par son porteur et/ou par un superviseur, en temps réel, du flux de rayonnements ionisants et/ou de la dose intégrée par l'opérateur qui porte le dispositif. Le cas échéant, l'opérateur et chaque superviseur est alerté en temps réel d'un dépassement de seuil de débit de dose ou de dosimétrie.

Dans des modes de réalisation, le circuit 51 comporte un moyen 68 de détection du port de l'enveloppe 50 par un opérateur et un moyen 69 d'activation du fonctionnement de chaque capteur et de l'émetteur de l'enveloppe dès que le port de l'enveloppe 50 par un opérateur est détecté. Le moyen 68 de détection du port de l'enveloppe 50 peut être un contact sec, un capteur de mouvement, un capteur de température, par exemple.

Dans des modes de réalisation, le circuit 51 comporte une mémoire 70 autonome de stockage de valeurs captées par le capteur 52 et/ou de valeurs calculées par l'analyse 59. Cette mémoire 70 permet, en cas de défaillance de communication, une transmission ultérieure.

Ainsi, l'enveloppe 50 permet :
- de mesurer la dose intégrée ainsi que le débit de dose au niveau des mains de l'opérateur,
   de transmettre en temps réel les mesures à un écran déporté ainsi qu'un système d'information centralisé,
- de configurer des seuils d'alertes en débit de dose et dose intégrée.
- d'identifier le porteur du dispositif.
de s'identifier à un poste de travail sans contact afin de permettre de classer les informations dosimétriques via un logiciel de supervision.

Bien qu'un seul capteur 52 soit représenté en figure 4, l'enveloppe 50 peut comporter une pluralité de capteurs sensibles à différents types de rayonnement ionisants.

Préférentiellement, l'espace intérieur de l'enveloppe 50, notamment entre chaque capteur, l'émetteur et la source d'alimentation, est coulé dans une résine, ce qui augmente sa résistance aux chocs et vibrations.

Préférentiellement, l'enveloppe 50 comporte, de plus, un moyen d'identification sans contact (non représenté), par exemple un code à barres ou une étiquette électronique, par exemple de type RFID (acronyme de RadioFrequence IDentification pour identification radiofréquence) passive. Ce moyen d'identification permet d'associer l'enveloppe à une zone d'activité, à un poste de travail ou à un opérateur, dans un but de traçabilité et de certification.

On observe, en figure 5, un dispositif 40 comportant :
- une enveloppe 50 portée par une bague 41 au doigt de l'opérateur et
- une enveloppe 50 dans un boîtier 42 clipsé sur les lunettes de l'opérateur ou fixé sur un bandeau (non représenté).

La bague 41 pouvant être portée au doigt par l'opérateur, sous des gants de protection, permet d'effectuer une dosimétrie d'extrémités.

Le boîtier 42 permet d'effectuer la dosimétrie au niveau du cristallin ou de toute partie spécifique du corps.

Dans le mode de réalisation représenté en figure 5, le dispositif 40 comporte, de plus, un terminal portable 43, ici porté au poignet de l'opérateur, qui comporte un récepteur des données émises par l'émetteur 53 de chaque enveloppe 50 et un moyen de signalisation.

Le moyen de signalisation, par exemple un écran, une diode électroluminescente et/ou un haut-parleur signale au porteur des enveloppes 50 quand les données reçues par le terminal portable 43 représentent un rayonnement instantané ou un rayonnement intégré supérieur à une valeur limite prédéterminée. Préférentiellement, la valeur limite de rayonnement instantané et la valeur limite de rayonnement intégré sont modifiables.

Le terminal portable 43 permet au porteur de l'enveloppe 50 d'obtenir une mesure de la dose intégrée ainsi que le débit de dose au niveau de l'enveloppe 50, ici au niveau des mains de l'opérateur et de ses yeux. L'opérateur est ainsi alerté en temps réel d'un dépassement de seuil de débit de dose ou de dosimétrie.

Dans le mode de réalisation représenté en figure 5, le dispositif 40 comporte, de plus, un relais local 44 de données émises par l'émetteur 53 de chaque enveloppe 50. Ce relais local 44 retransmet, à longue distance, les données émises par l'émetteur 53 de chaque enveloppe 50. Cette retransmission des données sur une longue distance se fait avec une liaison filaire ou non filaire. Préférentiellement, le relais local 44 associe son identifiant aux données retransmises, ce qui permet de déterminer la zone dans laquelle se situe le dispositif 40.

On note que ce relais local 44 est d'autant plus nécessaire quand l'émetteur 53 est configuré pour transmettre des données à une distance inférieure à la distance de communication d'un réseau local sans-fil.

Dans le mode de réalisation représenté en figure 5, le dispositif 40 comporte un récepteur central 45 de données émises par l'émetteur 53 de chaque enveloppe 50 et un système 46 de gestion de ces données.

## Revendications

1. Dispositif (40) individuel autonome de mesure d'au moins un rayonnement ionisant, **caractérisé en ce qu'**il comporte :
- au moins un capteur (22, 52) de chaque dit rayonnement ionisant, fournissant un signal électrique représentatif de la quantité de chaque dit rayonnement ionisant, mettant en œuvre une tension de biais (21), présentant une dimension de l'ordre de vingt mm²,
- un composant unique (29, 60) de traitement du signal configuré pour réaliser des fonctions de pré-amplification (23, 56), d'amplification (24, 57) et de mise en forme (25, 58) du signal fourni par chaque capteur (22, 52)
- un composant unique (61) d'analyse (59) du signal fourni par chaque capteur (22, 52) après amplification, ce composant comportant un émetteur (31, 53) de signal sans-fil configuré pour émettre à distance des données représentatives de chaque signal fourni par un capteur,
- une source (27, 54) d'alimentation électrique autonome configurée pour alimenter chaque capteur et ledit émetteur, la tension de biais étant proche ou égale à la tension de la source d'alimentation électrique autonome,
le capteur, le composant unique d'analyse du signal, le composant unique de traitement du signal et la source d'alimentation étant embarqués dans une enveloppe (50) d'une surface inférieure à soixante mm², le poids total de l'enveloppe, du capteur, du composant unique d'analyse du signal, du composant unique de traitement du signal et de la source d'alimentation étant inférieur à dix grammes.

2. Dispositif (40) selon la revendication 1, qui comporte un générateur (21, 55) de tension de biais, chaque capteur (22, 52) de rayonnements ionisants mettant en œuvre cette tension de biais, dans lequel la tension de biais est la tension en sortie de la source (27, 54) d'alimentation électrique autonome ou une tension stabilisée proche de la tension de la source (27, 54) d'alimentation électrique autonome.

3. Dispositif (40) selon la revendication 2, dans lequel le composant unique (60) de traitement du signal présente :
- une haute impédance d'entrée,
- un faible courant de biais (< 1 pA) en entrée,
- un faible bruit (< 10 nV/Hz),
- une large bande passante (> 10 MHz).

4. Dispositif (40) selon l'une des revendications 1 à 3, qui comporte un composant unique (62) multifonction de protection (63) de la source d'alimentation électrique autonome contre les surtensions, les décharges profondes et les surchauffes, de gestion (64) de la charge de la source d'alimentation électrique autonome et de gestion (65) de la tension d'alimentation du circuit unique (61) d'analyse (59).

5. Dispositif (40) selon la revendication 4, dans lequel la gestion (65) de l'alimentation de l'enveloppe (50) par le composant unique (62) multifonction est configurée pour :
- fournir, au plus, deux tensions différentes,
- s'il y a plus d'une tension, les tensions sont comprises entre la moitié en plus et la moitié en moins de la tension de source (54) d'alimentation électrique autonome.

6. Dispositif (40) selon l'une des revendications 1 à 5, qui comporte, de plus, un terminal portable (43) comportant un récepteur des données émise par l'émetteur (31, 53) de l'enveloppe (50) et un moyen de signalisation au porteur de l'enveloppe quand les dites données représentent un rayonnement instantané ou un rayonnement intégré supérieur à une valeur limite prédéterminée.

7. Dispositif (40) selon l'une des revendications 1 à 6, qui comporte, de plus, un relais local (44) de données émises par l'émetteur (31, 53) de l'enveloppe (50), relais configuré pour retransmettre, à longue distance, les données émises par l'émetteur de l'enveloppe.

8. Dispositif (40) selon l'une des revendications 1 à 7, qui comporte, de plus, un récepteur central (45) de données émises par l'émetteur et un système (46) de gestion desdites données.

9. Dispositif (40) selon l'une des revendications 1 à 8, qui comporte une bague (41) portant ladite enveloppe (50).

10. Dispositif (40) selon l'une des revendications 1 à 9, qui comporte un petit boitier (42) comportant ladite enveloppe (50), ce boîtier étant clipsable sur des lunettes ou intégrable dans un bandeau.

11. Dispositif (40) selon l'une des revendications 1 à 10, qui comporte une mémoire (67) d'un identifiant de l'enveloppe (50), d'un poste de travail ou du porteur de l'enveloppe, l'émetteur (31, 53) de signal sans-fil étant configuré pour émettre à distance cet identifiant avec des données représentatives de chaque signal fourni par un capteur (22, 52).

12. Dispositif (40) selon l'une des revendications 1 à 11, dans lequel l'espace intérieur de l'enveloppe (50), entre chaque capteur (22, 52), l'émetteur (31, 53) et la source d'alimentation (27, 54), est coulé dans une résine.

13. Dispositif (40) selon l'une des revendications 1 à 11, dans lequel l'émetteur (31, 53) est configuré pour transmettre des données à une distance inférieure à la distance de communication d'un réseau local sans-fil.

14. Dispositif (40) selon l'une des revendications 1 à 13, qui comporte un moyen (68) de détection du port de l'enveloppe (50) par un opérateur et un moyen (69) d'activation du fonctionnement de chaque capteur (22, 52) et de l'émetteur (31, 53) de l'enveloppe dès que le port de l'enveloppe par un opérateur est détecté.

15. Dispositif (40) selon l'une des revendications 1 à 14, dans lequel l'enveloppe (50) comporte une mémoire (70) autonome de stockage de valeurs captées et/ou de valeurs calculées.

## Patentansprüche

1. Autonome Einzelvorrichtung (40) zum Messen mindestens einer ionisierenden Strahlung, **dadurch gekennzeichnet, dass** sie Folgendes umfasst:
- mindestens einen Sensor (22, 52) für jede der genannten ionisierenden Strahlungen, der ein elektrisches Signal liefert, das für die Menge jeder der genannten ionisierenden Strahlungen repräsentativ ist, eine Vorspannung (21) verwendet und eine Größe in der Größenordnung von zwanzig mm² aufweist,
- eine einzige Komponente (29, 60) zur Signalverarbeitung, die so konfiguriert ist, dass sie Vorverstärkungs- (23, 56), Verstärkungs- (24, 57) und Formungsfunktionen (25, 58) für das von jedem Sensor (22, 52) gelieferte Signal ausführt,
- eine einzige Komponente (61) zur Analyse (59) des von jedem Sensor (22, 52) nach der Verstärkung gelieferten Signals, wobei diese Komponente einen drahtlosen Signalsender (31, 53) umfasst, der so konfiguriert ist, dass er Daten, die für jedes von einem Sensor gelieferte Signal repräsentativ sind, aus der Ferne sendet,
- eine autonome Stromversorgungsquelle (27, 54), die so konfiguriert ist, dass sie jeden Sensor und den genannten Sender mit Strom versorgt, wobei die Vorspannung nahe oder gleich der Spannung der autonomen Stromversorgungsquelle ist,
wobei der Sensor, die einzige Komponente zur Signalanalyse, die einzige Komponente zur Signalverarbeitung und die Stromquelle in einem Gehäuse (50) mit einer Fläche von weniger als 60 mm² untergebracht sind und das Gesamtgewicht des Gehäuses, des Sensors, der einzigen Komponente zur Signalanalyse, der einzigen Komponente zur Signalverarbeitung und der Stromquelle weniger als 10 Gramm beträgt.

2. Vorrichtung (40) nach Anspruch 1, die einen Vorspannungsgenerator (21, 55) umfasst, wobei jeder Sensor (22, 52) für ionisierende Strahlung diese Vorspannung verwendet, wobei die Vorspannung die Ausgangsspannung der unabhängigen Stromversorgung (27, 54) oder eine stabilisierte Spannung nahe der Spannung der unabhängigen Stromversorgung (27, 54) ist.

3. Vorrichtung (40) nach Anspruch 2, wobei die einzelne Komponente zur Signalverarbeitung (60) Folgendes aufweist:
- eine hohe Eingangsimpedanz,
- einen geringen Vorspannungsstrom (< 1 pA) am Eingang,
- ein geringes Rauschen (< 10 nV/Hz),
- eine große Bandbreite (> 10 MHz).

4. Vorrichtung (40) nach einem der Ansprüche 1 bis 3, die eine einzige multifunktionale Komponente (62) zum Schutz (63) der autonomen Stromversorgungsquelle vor Überspannungen, tiefes Entladen und Überhitzen, zur Verwaltung (64) der Last der autonomen Stromversorgung und zur Verwaltung (65) der Versorgungsspannung der einzigen Schaltung (61) zur Analyse (59) umfasst.

5. Vorrichtung (40) nach Anspruch 4, wobei die Verwaltung (65) der Stromversorgung des Gehäuses (50) durch die einzige multifunktionale Komponente (62) so konfiguriert ist, dass sie:
- höchstens zwei verschiedene Spannungen liefert,
- wenn mehr als eine Spannung vorhanden ist, die Spannungen zwischen mehr als der Hälfte und weniger als der Hälfte der Spannung der autonomen Stromversorgung (54) liegen.

6. Vorrichtung (40) nach einem der Ansprüche 1 bis 5, die außerdem eine tragbare Datenendstation (43) mit einem Empfänger für die vom Sender (31, 53) des Gehäuses (50) gesendeten Daten sowie ein Mittel zur Benachrichtigung des Trägers des Gehäuses, wenn die genannten Daten eine momentane Strahlung oder eine integrierte Strahlung über einem vorbestimmten Grenzwert darstellen umfasst.

7. Vorrichtung (40) nach einem der Ansprüche 1 bis 6, die zusätzlich ein lokales Relais (44) für die vom Sender (31, 53) des Gehäuses (50) gesendete Daten umfasst, wobei das Relais so konfiguriert ist, dass es die vom Sender des Gehäuses gesendeten Daten über eine große Entfernungen weiterleitet.

8. Vorrichtung (40) nach einem der Ansprüche 1 bis 7, die zusätzlich einen zentralen Empfänger (45) für vom Sender gesendete Daten und ein System (46) zur Verwaltung dieser Daten umfasst.

9. Vorrichtung (40) nach einem der Ansprüche 1 bis 8, die einen Ring (41) umfasst, der das Gehäuse (50) trägt.

10. Vorrichtung (40) nach einem der Ansprüche 1 bis 9, die einen kleinen Behälter (42) mit dem genannten Gehäuse (50) umfasst, wobei dieser Behälter an einer Brille befestigt oder in ein Stirnband integriert werden kann.

11. Vorrichtung (40) nach einem der Ansprüche 1 bis 10, die einen Speicher (67) für eine Kennung des Gehäuses (50), eines Arbeitsplatzes oder des Trägers des Gehäuses umfasst, wobei der Sender (31, 53) für Funksignale so konfiguriert ist, dass er diese Kennung zusammen mit Daten, die für jedes von einem Sensor (22, 52) gelieferte Signal repräsentativ sind, aus der Ferne sendet.

12. Vorrichtung (40) nach einem der Ansprüche 1 bis 11, wobei der Innenraum des Gehäuses (50) zwischen jedem Sensor (22, 52), dem Sender (31, 53) und der Stromquelle (27, 54) mit Harz ausgegossen ist.

13. Vorrichtung (40) nach einem der Ansprüche 1 bis 11, wobei der Sender (31, 53) so konfiguriert ist, dass er die Daten über eine Entfernung überträgt, die kleiner ist als die Kommunikationsentfernung eines lokalen drahtlosen Netzwerks.

14. Vorrichtung (40) nach einem der Ansprüche 1 bis 13, die ein Mittel (68) zum Erfassen des Tragens des Gehäuses (50) durch einen Bediener sowie ein Mittel (69) zum Aktivieren des Betriebs jedes Sensors (22, 52) und des Senders (31, 53) des Gehäuses, sobald das Tragen des Gehäuses durch einen Bediener erkannt wird umfasst.

15. Vorrichtung (40) nach einem der Ansprüche 1 bis 14, wobei das Gehäuse (50) einen autonomen Speicher (70) zum Speichern von erfassten Werten und/oder berechneten Werten umfasst.

## Claims

1. Individual autonomous device (40) for measuring at least one ionising radiation, **characterised in that** it comprises:
- at least one sensor (22, 52) of each said ionising radiation, supplying an electrical signal representative of the quantity of each said ionising radiation, utilising a bias voltage (21), having a dimension of the order of twenty mm²;
- a single signal processing component (29, 60) configured to perform the functions of pre-amplification (23, 56), amplification (24, 57) and formatting (25, 58) of the signal supplied by each sensor (22, 52);
- a single component (61) for analysing (59) the signal supplied by the sensor (22, 52) after amplification, this component comprising a wireless signal transmitter (31, 53) configured to remotely transmit data representative of each signal supplied by a sensor;
- an autonomous electric power source (27, 54) configured to power each detector and said transmitter, the bias voltage being close to or equal the voltage of the autonomous electric power source,
the sensor, the single signal analysis component, the single signal processing component and the power source being embedded in an assembly (50) with a surface area of less than sixty mm², the total weight of the assembly, sensor, single signal analysis component, single signal processing component and power source being less than ten grammes.

2. Device (40) according to claim 1, which comprises a bias-voltage generator (21, 55), each ionising radiation sensor (22, 52) utilising this bias voltage, wherein the bias voltage is the output voltage from the autonomous electric power source (27, 54) or a voltage stabilised close to the voltage of the autonomous electric power source (27, 54).

3. Device (40) according to claim 2, wherein the single signal processing component (60) has:
- a high input impedance;
- a low input bias current (< 1 pA);
- low noise (< 10 nV/Hz);
- a large bandwidth (> 10 MHz).

4. Device (40) according to one of claims 1 to 3, which comprises a single multifunction component (62) to protect (63) the autonomous electric power source against voltage surges, deep discharges and overheating, manage (64) the charge of the autonomous electric power source, and manage (65) the power supply voltage of the single circuit (61) for analysis (59).

5. Device (40) according to claim 4, wherein management (65) of the power supply of the assembly (50) by the single multifunction component (62) is configured as follows:
- to supply, at most, two different voltages;
- if there is more than one voltage, the voltages are between one-and-a-half and one-half of the voltage of the autonomous electric power source (54).

6. Device (40) according to one of claims 1 to 5, which also comprises a mobile terminal (43) comprising a receiver of the data transmitted by the transmitter (31, 53) of the assembly (50) and a means for signalling to the bearer of the assembly when these data represent a prompt radiation or integrated radiation greater than a predefined limit value.

7. Device (40) according to one of claims 1 to 6, which also comprises a local relay (44) of data transmitted by the transmitter (31, 53) of the assembly (50), a relay configured for the long-distance retransmission of the data transmitted by the transmitter of the assembly.

8. Device (40) according to one of claims 1 to 7, which also comprises a central receiver (45) of data transmitted by the transmitter, and a system (46) for managing these data.

9. Device (40) according to one of claims 1 to 8, which comprises a ring (41) bearing said assembly (50).

10. Device (40) according to one of claims 1 to 9, which comprises a small case (42) comprising said assembly (50), said case able to be clipped onto glasses or incorporated into a strap.

11. Device (40) according to one of claims 1 to 10, which comprises a memory (67) of an identifier of the assembly (50), workstation or bearer of the assembly, the wireless signal transmitter (31, 53) being configured to remotely transmit this identifier with data representative of each signal supplied by a sensor (22, 52).

12. Device (40) according to one of claims 1 to 11, wherein the interior space of the assembly (50), between each sensor (22, 52), the transmitter (31, 53) and the power source (27, 54), is resin-sealed.

13. Device (40) according to one of claims 1 to 11, wherein the transmitter (31, 53) is configured to transmit data at a distance less than the communication distance of a local wireless network.

14. Device (40) according to one of claims 1 to 13, which comprises a means (68) for detecting that the assembly (50) is being borne by an operator, and a means (69) for activating the operation of each sensor (22, 52) and the transmitter (31, 53) of the assembly once it is detected that the assembly is being borne by an operator.

15. Device (40) according to one of claims 1 to 14, wherein the assembly (50) comprises an autonomous memory (70) for storing values captured and/or values calculated.
